# EUROPEAN PATENT SPECIFICATION

(11) **EP 1 824 958 B1**
(45) Date of publication and mention of the grant of the patent: **13.01.2010**
(21) Application number: 05821031.1
(22) Date of filing: 02.11.2005
(51) Int. Cl.: C11D 11/00, C11D 7/36, C11D 7/26, C11D 7/32, C11D 7/16

(54) **METHOD OF CLEANING CONTAINERS FOR RECYCLING**
VERFAHREN ZUR REINIGUNG VON BEHÄLTERN FÜR DAS RECYCLING
PROCEDE DE NETTOYAGE DE RECIPIENTS RECYCLES

(30) Priority: 03.11.2004 US 624616 P
(43) Date of publication of application: 29.08.2007
(73) Proprietor: JohnsonDiversey, Inc.,, Sturtevant, WI 53177-0902 (US)
(72) Inventor: CLIFTON, Mark V., Reading Berkshire RG4 6QS (GB); MARLOW, Bert, R., Hopewell Junction, NY 12533 (US); MEHTA, Anish, Alpharetta, GA 30004 (US); SPERLING, Barry, D., Hebron, KY 41048 (US)
(74) Representative: van Heuvel, Margaretha
(86) International application number: PCT/US2005/039598
(87) International publication number: WO 2006/052578

(56) References cited:
- EP-A- 0 844 301
- EP-A- 0 892 040
- WO-A-00/56851
- WO-A-95/02674
- WO-A-97/38079
- WO-A-97/43372
- WO-A-97/48927
- WO-A-98/00485
- WO-A-98/18575
- WO-A-98/59027
- WO-A-99/46358
- WO-A-2004/024857
- WO-A-2004/027001
- US-A1- 2003 083 216
- US-B1- 6 420 326
- ANONYMOUS: "EDTA solution, pH 8"[Online] Retrieved from the Internet: URL:http://www.leighlabs.com/MSDS/medta.ht m>

## Description

The present invention relates to methods of cleaning containers for recycling. In particular, it relates to methods of cleaning glass containers which remove caustic solution residuals such as heavy metals. The invention further relates to rinse solutions for use in the present methods and containers which have been cleaned according to the methods.

### BACKGROUND

Glassware, such as jars and bottles used in the food and beverage industries, are frequently re-washed, recycled, and/or re-used. Such recycling/reuse is advantageous in that it reduces the amount of glassware that pollutes local neighborhoods and fills local landfills with non-biodegradable debris. Recycling of glass containers also enables the food and beverage industries to save money on their investment by getting multiple uses out of each container.

When recycling glassware, it is imperative that the glassware be washed to the point of being commercially sterile. According to the US Food and Drug Administration, commercial sterility of equipment and containers used for aseptic processing and packaging of food means the condition achieved by application of heat, chemical sterilant(s), or other appropriate treatment that renders the equipment and containers free of viable microorganisms having public health significance, as well as microorganisms of nonhealth significance, capable of reproducing in the food under normal nonrefrigerated conditions of storage and distribution. Obtaining commercially sterile bottles, for example, from bottles that have been previously used, is not easy since used bottles often contain dirt, mold, sugar, food residues, product labels, glue and the like. To remove such materials from the containers being cleaned, harsh environments such as those that employ relatively long contact times, high temperatures and caustic (e.g., NaOH) are used. See for instance WO 97/38079. Such environments typically are successful in cleaning used glassware so that it is substantially free of such materials and is commercially sterile. The cleaning solutions are ordinarily rinsed from the containers with clean water. Typically, bottle washers are used to accomplish such washing and sterilization of bottles.

However, use of such harsh wash conditions can itself cause issues of a different sort. In many parts of the world, the glass used for recyclable jars and bottles contains lead and/or other heavy metals in the silica matrix. Often, a wash with, e.g., caustic soda solution at high temperature corrodes the glass surface, exposing lead and/or other heavy metals ions bonded to the surface. In addition, during use the caustic wash solution may come to contain lead and other heavy metals from the dissolved glass or decorations thereon and may redeposit caustic solution residuals such as metals onto the surface of the glass. The clean-water washes typically used to rinse the caustic solution from the jars and bottles may not remove all of these caustic solution residuals, such as lead or other metals bound to the glass surface. Hence, there is an immediate need for methods of cleaning recycled glass containers which lower the amount of caustic solution residuals, on and/or in such containers.

### SUMMARY

The present invention provides methods for cleaning glass containers for reuse including exposing a glass container to an aqueous caustic solution comprising a metal hydroxide, and rinsing the glass container with a rinse solution comprising an effective amount of a heavy metal chelating agent. The chelating agent comprises at least an amine, a carboxylic acid functional group, or a phosphorous-oxygen functional group and the rinse solution has a pH of at least 4 but not more than 11. Optionally, the rinse solution can further include an acid. The metal hydroxide can be an alkaline metal hydroxide such as sodium hydroxide (NaOH) or potassium hydroxide (KOH). The caustic solution can include at least 1% by wt. of metal hydroxide(s). The effective amount of chelating agent in the rinse solution is an amount which reduces the concentration of heavy metal residing on or subsequently leaching from the surface of a glass container being cleaned. In some embodiments this amount is an amount sufficient to provide free chelating agent in the rinse solution. In some embodiments the effective amount of chelating agent is an amount sufficient to provide at least 1 ppm free chelating agent in the rinse solution. Alternative embodiments include an amount of chelating agent sufficient to provide at least 5 ppm free chelating agent in the rinse solution. Still other embodiments of the rinse solution include an effective amount of chelating agent in an amount sufficient to provide 0.5 - 100 ppm free chelating agent in the rinse solution. Alternative embodiments include an amount of chelating agent sufficient to provide 5-10 ppm free chelating agent. The rinse solution can include at least 0.0001 % by wt. of chelating agent(s).

In one embodiment, the caustic solution may include from 1-5 wt. % of a metal hydroxide such as sodium hydroxide, and/or the rinse solution may include from 0.0001-1 wt. % of the chelating agent. In one embodiment, the rinse solution may include an acid in an amount of at least 0.001% by wt. In one embodiment, the rinse solution may include from 0.001-1 wt. % of an acid. Both the aqueous caustic and the rinse solutions may be used repeatedly on numerous glass containers before losing efficacy. In one embodiment, the pH of the rinse solution ranges from 5 to 9. Alternative embodiments include a rinse solution having a pH that ranges from 6 - 8. In some embodiments, the chelating agent is EDTA, EGTA, NTA, DTPA, HEIDA, IDS, MGDA gluconic acid, 2,2'-bipyridyl, phosphonic acid, complex phosphates, a mixture thereof, or salts thereof. The acid can be a mono-, di-, or polycarboxylic acid. Suitable acids include acetic, oxalic, malic, maleic, fumaric, tartaric, citric, aspartic, glutamic acid, a mixture of any two or more thereof, or salts thereof. In some embodiments, the acid is a chelator. In some embodiments, acid ranges include from 0.001 to 1.0 wt. %.

Glass containers cleaned according to these methods show a marked reduction in the heavy metal content found on and/or in the cleaned containers. In one embodiment, the glass container which has been cleaned by the inventive method exhibits less than 100 parts per billion (ppb) of a heavy metal in a 500 parts per million (ppm) phosphoric acid test solution that has been stored in the cleaned container for at least 10 minutes, wherein the glass container would exhibit 100 or more ppb of the heavy metal if rinsed with water alone. In another embodiment, the glass container which has been cleaned by the inventive method exhibits less than 20 ppb of the heavy metal in the phosphoric acid test solution, wherein the glass container would exhibit 20 or more ppb of the heavy metal if rinsed with water alone. In some embodiments, the heavy metal is lead, nickel, copper, zinc, arsenic, selenium, molybdenum, cadmium, chromium, mercury, or a mixture thereof.

### DETAILED DESCRIPTION

There are provided methods of cleaning containers, such as glass jars or glass bottles, for the purpose of reusing and/or recycling them. The methods include a first step of exposing the glass container to an aqueous caustic solution including a metal hydroxide. Typically, alkali metal hydroxides are used such as sodium hydroxide or potassium hydroxide. The aqueous caustic solution must be concentrated enough to remove dirt, mold, sugar, food residue and the like from the container being washed. In one embodiment, the aqueous caustic solution comprises from 1-5 wt. % metal hydroxide and in another embodiment contains 2-3 wt. % metal hydroxide. The aqueous caustic solution may be used at room temperature, but advantageously is heated, in one embodiment to a temperature ranging from 30°C to 80°C. The temperature used will vary according to the needs of the application and is readily selected by those of skill in the art. Exemplary temperature ranges include from 30°C to 70°C, from 40°C or 50°C to 80°C, and from 60°C to 70° or 80°C.

The present methods further include the step of rinsing the glass container with a rinse solution including an effective amount of a heavy metal chelating agent and an acid, or an acid which may act as a chelator. The rinse solution is effective at a pH of at least 4 but not more than 11. At pHs below 4 the rinse is still effective at removing heavy metals from the glass but is too corrosive for use over time with standard equipment used in the cleaning uf glass containers. At pHs above 11, the rinse solution becomes ineffective at removing the heavy metals from the glass surface. Advantageously, the pH of the rinse solution ranges from 5-9 and particularly from 6-8. Typically, the pH of the rinse solution will be centered about 7-8.

Chelating agents used in the methods of the invention include at least an amine, a carboxylic acid functional group, or a phosphorous-oxygen functional group. Such chelating agents bind a heavy metal as a bi-, tri-, tetra-, penta-, or hexacoordinate ligand. Exemplary heavy metal chelating agents that may be used in the present methods include, but are not limited to, EDTA (ethylenediaminetetraacetic acid), EGTA (ethyleneglycol-bis-(β-aminoethyl ether)-N, N-tetraacetic acid), NTA (nitrilotriacetic acid), DTPA (diethylenetriaminepentaacetic acid), HEIDA (N-(2-Hydroxyethyl)iminodiacetic acid), gluconic acid, 2,2'-bipyridyl, IDES (iminodisuccinic acid), MGDA (methyl glycine diacetic acid), phosphonic acid, complex phosphates, and mixtures thereof. Salts of the heavy metal chelating agents may also be used so long as the chelating agent has less affinity for the salt being used compared to the heavy metal which is to be removed from the surface of the glass container. As employed herein, "heavy metal" refers to any metal having an atomic weight greater than that of calcium or less than or equal to that of uranium. In addition, arsenic and selenium are also included in the definition of heavy metals herein. Heavy metals of particular interest include lead, nickel, copper, zinc, arsenic, selenium, molybdenum, cadmium, chromium, and mercury.

As employed herein, an effective amount of chelating agent is that amount which reduces the concentration of heavy metal residing on or subsequently leaching from the surface of the glass container being cleaned. In some embodiments an effective amount of chelating agent is an amount sufficient to provide free chelating agent in the rinse solution. Some embodiments include an amount of chelating agent sufficient to provide between 0.5 ppm and 100 ppm free chelating agent in the rinse solution. Additional embodiments include an amount of chelating agent sufficient to provide 3-15 ppm free chelating agent in the rinse solution. Still other embodiments include an amount of chelating agent sufficient to provide 5-10 ppm free chelating agent in the rinse solution. Further embodiments include a rinse solution having at least 1 ppm free chelating agent in the rinse solution. Still other embodiments include a rinse solution having at least 5 ppm free chelating agent. In alternative embodiments, the effective amount of total chelating agent ranges from 0.0001 wt. % to 1 wt. %. In other embodiments, the effective amount of chelating agent ranges from 0.005, 0.01, 0.02, 0.05 or 0.1 wt. % to 0.4, 0.5, 0.6, or 0.7 wt. %.

A number of factors affect the specific amount of chelating agent necessary to be added to a rinse solution to provide for reduction of the concentration of heavy metal residing on or subsequently leaching from the surface of the glass container being cleaned. In general, chelating agent will complex or coordinate metal ions present. Chelating agents coordinate with metal ions at a fixed ratio (stoichiometric) under specified conditions. When all available metal ions have been chelated under the specified conditions, the excess is measured as free chelating agent. When using the rinse solution on glass containers to remove heavy metals it has been found beneficial in some embodiments to provide an amount of chelating agent sufficient to provide for free chelating agent in the rinse solution. Several factors affect the presence of free chelating agent in the rinse solution. In particular, total hardness of the water used in the rinse solution and scale deposits on the washing/rinsing equipment can affect the presence of free chelating agent. Total hardness is the measure of metal compounds, in particular calcium and magnesium compounds, dissolved in water. Total hardness does not differentiate the ratios or form in which the aforementioned metals are present and can be expressed as mg / l calcium carbonate.

The reduction of total hardness and/or scale deposits will reduce the concentration of competing metal ions (e.g. magnesium, calcium, etc.) from the solution itself, thereby allowing the chelating agent to chelate heavy metal residing on or subsequently leaching from the surface of the glass container being cleaned. Utilization of "softened" water and removal of scale deposits on equipment readily allow for the presence of free chelating agent in the rinse solution. Softened water is water where hard water components such as calcium and magnesium have been removed or reduced to about 50 ppm of total hardness components or less. Alternatively, additional chelating agent can be added to the rinse solution to complex the water hardness components in the rinse solution and provide for the presence of free chelating agent in the rinse solution. It is not necessary that all the water hardness and/or scale components competing for the chelating agent be removed. An amount of chelating agent which reduces the number of such components in the rinse solution can provide for an effective amount of chelating agent which reduces the concentration of heavy metal residing on or subsequently leaching from the surface of the glass container being cleaned.

Optionally, the rinse solution can also include an acid. Surprisingly, it has been discovered that the acid present in the rinse solution works in conjunction with the chelating agent in the removal of heavy metals from the glass surface. The acid may also be employed to control the pH and can itself be a chelator of heavy metals. Thus, the acid is typically a mono-, di-, or polycarboxylic acid. Exemplary carboxylic acids include acetic, oxalic, malic, maleic, fumaric, tartaric, citric, aspartic, succinic, glutamic acid, a mixture of any two or more thereof, or salts thereof. In some embodiments, the amount of acid used in the rinse solution for the step ranges from 0.001 to 0.5 or 1 wt. % or from or 0.01 to 0.5 or 1 wt. %. In some embodiments, the amount of acid is equal to or less than the amount of heavy metal chelating agent.

The rinse solution can further comprise a buffer for improved control of the pH of the rinse solution. In normal use, the rinse water utilized in the rinse solution is intended to be repeatedly used on numerous glass containers. With each use, the rinse solution is being diluted with small amounts of the aqueous caustic solution remaining on the glass containers that can raise the pH of the rinse solution and lower the efficacy of heavy metal removal. The addition of buffer(s) at, e.g., from 0.01 wt % to 1 wt % slows this rise in pH and extends the life of the rinse solution. In some embodiments, the amount of buffer runs from 0.01 wt % to 0.1, 0.2, or 0.5 wt %; from 0.05 wt % to 0.2, 0.5 or 1 wt %; or from 0.1 to 0.2, 0.5 or 1 wt %. Buffers suitable for use in the present invention include any typically buffer used in the art to attain a pH of at least 4 but less than 11. Exemplary agents include di-potassium phosphate, (K₂HPO₄), di-sodium phosphate (Na₂PO₄), mixtures thereof, and the like. In addition to buffers or as an alternative therefore, during formulation of the rinse solution, small amounts of metal hydroxides and/or mineral acids may be used to adjust the pH of the rinse solution to the desired value.

In alternative embodiments, rather than repeatedly reusing the water in the rinse solution, fresh water can be utilized to provide the inventive rinse solution. Such fresh water addition reduces or altogether eliminates the need for use of a buffer in the rinse solution, as caustic solution carryover which raises the pH of the rinse solution and reduces the efficacy of heavy metal removal, is minimized or eliminated.

The rinse solutions may be formulated as concentrates that may be diluted with water before use or as working solutions. In concentrated form the aqueous rinse solution includes 0.1-50 wt % chelating agent and 0.1- 25 wt % acid, wherein the chelating agent comprises at least an amine, a carboxylic acid functional group, or a phosphorous-oxygen functional group. The concentrated rinse solution may further include 0.1-50 wt % buffer. In some embodiments the concentrates yield working solutions upon dilution with water that include 0.0001-1 wt % chelating agent and 0.001-1.0 wt % acid. In alternative embodiments, water hardness levels may be used to determine content of concentrates and resulting diluted working solutions. In some embodiments the diluted rinse solutions have at least some level or amount of free chelating agent. In alternative embodiments, between 0.5 and 100 ppm, 3-15 ppm or 5-10 ppm free chelating agent are present. Still other embodiments include at least 1 ppm free chelating agent, at least 3 ppm free chelating agent, and at least 5 ppm free chelating agent. The dilute rinse solution can further include 0.01-1 wt% buffer. The chelating agent, buffer and acid are as described herein.

In some embodiments, the rinse solution consists essentially of a heavy metal chelating agent, wherein the chelating agent comprises at least an amine, a carboxylic acid functional group, or a phosphorous-oxygen functional group and the pH is at least 4 but not more than 11. In others, the rinse solution consists essentially of a heavy metal chelating agent and an acid, wherein the chelating agent comprises at least an amine, a carboxylic acid functional group, or a phosphorous-oxygen functional group and the pH is at least 4 but not more than 11. In still others, the rinse solution consists essentially of a heavy metal chelating agent, an acid and a buffer, wherein the chelating agent comprises at least an amine, a carboxylic acid functional group, or a phosphorous-oxygen functional group and the pH is at least 4 but not more than 11. In some embodiments, the wt % amount of acid is equal to or less than the wt % amount of the chelating agent. The chelating agent, buffer and acid are as described herein.

In some applications the buffering capacity of the rinsing formula is either too costly or simply not powerful enough to bring the pH of the rinse solution to a lower pH than 11. A solution of simple mineral or organic acid may be used to reduce the alkalinity into an effective range. In the applications tested, a 50% phosphoric acid solution was used to provide reduction of a rinse solution of pH 9-11 down to a range of 7.5 - 8.5. The application incurred the additional alkalinity through the inefficiency of caustic solution dripping from glass containers or crossing tank contamination in the wash/rinse apparatus.

Glass containers which have been cleaned by the methods disclosed herein, when filled with a food or beverage product, show measurably lower amounts of heavy metal after storage than the same glass container which has not been cleaned according to the inventive methods. A convenient test for determining the efficacy of cleaning methods for glass containers includes storing an aqueous solution containing 500 ppm phosphoric acid in the cleaned container for at least 10 minutes and subsequently analyzing the heavy metal content of the solution. Heavy metals that may be analyzed this way include lead, nickel, copper, zinc, arsenic, selenium, molybdenum, cadmium, chromium, mercury, or a mixture thereof. In particular, inventive methods are effective at lowering the amount of lead, hexavalent chromium, or cadmium which may otherwise be found on and/or in the cleaned glass container. Typically, glass containers which have been cleaned by the present methods exhibit less than 100 ppb of any heavy metal in a 500 ppm phosphoric acid test solution that has been stored in the clean container for 45 days. In contrast, the same glass container would exhibit 100 or more ppb of the heavy metal if rinsed only with water alone. In some embodiments, the phosphoric acid test solution exhibits less than 20 ppb or even less than 10 ppb of a heavy metal, whereas the same glass container if rinsed only with water would exhibit 20 ppb or more, or 10 ppb or more, respectively.

### EXAMPLES

### Example 1

The present example illustrates the effect of the present methods on the amount of lead leached from bottles washed on a bottling line. The bottles are washed for 13 minutes with a caustic solution containing 3 wt % NaOH at a temperature of 70 ° C. The bottles are subsequently washed with the rinse solution and conditions indicated in Table 1. The amount of acid added to the rinse solution is sufficient to give the stated pH. Each pH adjustment was titrated with 0.1% HCL solution to the stated pH using a standardized pH meter, unless the solution pH was below the desired level as with Tartaric acid solution pH=7. These solutions were then adjusted with 0.1 % NaOH to the stated pH. The test bottles are filled with a 500 ppm solution of phosphoric acid and are stored at ambient temperature for not less then 12 hours. The resulting solutions are tested for Pb. The variable "n" indicates the number of bottles to be tested. The columns denoted "Ave" and "Stdv" report the average concentration and standard deviations for lead in ppb found in or which will be found in the test solutions.

**Table 1.**

| **Rinse Solution** | **pH** | **n** | **Ave** | **Stdv** |
|---|---|---|---|---|
| Water | | 60 | 5.7 | 3.1 |
| Tartaric acid, (0.01-0.1 %) | 4.8 | 20 | 4.0 | 2.8 |
| | 5.0 | 24 | 2.6 | 2.3 |
| | 7.0 | 3 | 4.2 | 1.3 |
| Citric acid, (0.01-0.1 %) | 5.0 | 3 | 2.2 | 1.6 |
| Tartaric/citric blends, (0.01-0.1 %) | 5.0 | 27 | 1.6 | 1.6 |
| EDTA, (0.01-0.1 %) | 5.0 | 12 | 2.3 | 0.9 |
| | 7.0 | 12 | 5.5 | 8.1 |
| EDTA/tartaric blends, (0.01-0.1 %) | 4.5 | 3 | 1.1 | 0.2 |
| | 5.0 | 18 | 2.6 | 2.5 |
| | 5.3 | 3 | 2.3 | 2.1 |
| | 5.5 | 3 | 2.6 | 2.5 |
| | 6.4 | 3 | 0.7 | 0.3 |
| | 7.0 | 9 | 3.0 | 1.1 |
| | 7.2 | 3 | 1.4 | 1.1 |
| EDTA/citric blends, (0.01-0.1 %) | 5.0 | 6 | 2.8 | 2.7 |
| TSP*/tartaric blends, (0.01-0.1 %) | 5.0 | 6 | 2.9 | 1.8 |
| TSP/citric blends, (0.01-0.1 %) | 4.5 | 3 | 4.8 | 5.5 |
| | 5.0 | 9 | 2.0 | 1.2 |
| | 5.3 | 3 | 2.2 | 1.6 |
| | 5.5 | 3 | 2.6 | 1.8 |
| | 8.1 | 3 | 3.7 | 1.8 |
| Gluconic acid, 0.1% | 5.0 | 3 | 7.3 | 2.2 |
| Gluconic/tartaric, (0.01-0.1 %) | 5.0 | 3 | 3.2 | 2.0 |
| Gluconic/EDTA, (0.01-0.1 %) | 5.0 | 3 | 11.1 | 5.7 |
| Nonionic/tartaric, (0.01-0.1 %) | 5.0 | 3 | 3.6 | 1.0 |
| Nonionic/EDTA, (0.01-0.1 %) | 5.0 | 3 | 2.3 | 1.2 |

| | | | | |
|---|---|---|---|---|
| *Trisodium phosphate | | | | |

### Example 2

This example illustrates a laboratory test procedure for assessing lead removal from the surface of glass containers by the use of various rinse solutions. The amount of lead on the glass containers is standardized by preparing a lead wash solution as follows: 1) add 12 applied ceramic label (ACL) sections from new glass bottles to 2 liters of 3% aqueous sodium hydroxide solution; 2) heat the caustic solution in a covered stainless steel container for 6 hours at 80°C; 3) cool the solution and filter through Whatman 2 paper; and 4) analyze for lead content (ppm). The resulting solutions are adjusted to contain 250 ppm of lead and 3% caustic for use in the next step.

The rinse solutions are tested as follows: 1) new glass containers are filled with the ACL lead/caustic solution (250 ppm lead, 3% caustic) at a temperature of 70°C; 2) after 7 minutes, the containers are emptied and refilled with lead-free soft water; 3) after 120 seconds, the containers are emptied again and filled with the rinse solution to be tested; 4) after 120 seconds, the containers are emptied and filled with a 500 ppm phosphoric acid solution; and 5) the containers are closed and sent for lead testing. Glass containers which may be tested by this method include, for example, cayenne pepper sauce bottles, 12 ounce tomato sauce jars, carbonated beverage bottles, and pickle jars. Upon testing, methods and rinse solutions of the present invention show or will be shown to have reduced the level of adhered lead in such containers.

Table 2 presents results of the rinse procedure using a rinse agent of the invention versus clean water rinse for cayenne pepper sauce bottles, 12 ounce tomato sauce jars, and carbonated beverage bottles. The results clearly show that inventive methods and rinse agents reduce the level of lead that may be leached from such containers.

**Table 2**

| **Sample #** | **Description** | **Condition** | **Pb Level (ppb)** |
|---|---|---|---|
| 1 | Tomato Sauce Bottles | Blank | 100 |
| 2 | Tomato Sauce Bottles | Blank | 96 |
| 3 | Tomato Sauce Bottles | Rinse Agent Used, (EDTA/Tartaric, 0.1% | 66 |
| 4 | Tomato Sauce Bottles | Rinse Agent Used, (EDTA/Tartaric, 0.1% | 15 |
| 5 | Hot Sauce Bottles | Blank | 120 |
| 6 | Hot Sauce Bottles | Blank | 120 |
| 7 | Hot Sauce Bottles | Rinse Agent Used, (EDTA/Tartaric, 0.1% | 10 |
| 8 | Hot Sauce Bottles | Rinse Agent Used, (EDTA/Tartaric, 0.1% | 25 |
| 9 | Beverage Bottles | Blank | 220 |
| 10 | Beverage Bottles | Blank | 240 |
| 11 | Beverage Bottles | Rinse Agent Used, (EDTA/Tartaric, 0.1% | 3.7 |
| 12 | Beverage Bottles | Rinse Agent Used, (EDTA/Tartaric, 0.1% | 3.8 |

### Example 3

This example illustrates the effect of the present methods on the amount of lead leached from bottles washed on a bottling line at various levels of total water hardness with various levels of free chelating agents.

**Table 3A**

| Total Chelating Agent (%w/v) | Free Chelating Agent (%w/v) | pH | Total Hardness mg / I calcium carbonate | Lead (ppb) |
|---|---|---|---|---|
| Nil | Nil | 10.4 | 70 | 24 |
| | | | | |
| 0.0129 | Nil | 7.4 | 70 | 7 |
| 0.0126 | Nil | 7.4 | 35 | < 2 |
| 0.0140 | 0.0001 - 0.0003 | 7.6 | 15 | < 2 |

Table 3B illustrates the effectiveness of the inventive method if the total hardness is held constant and the total chelating agent is lowered resulting in lower levels of free chelating agent.

**Table 3B**

| Total Chelating Agent | Free Chelating Agent | pH | Total Hardness | Lead |
|---|---|---|---|---|
| (%w/v) | (%w/v) | | mg / l calcium carbonate | (ppb) |
| 0.0140 | 0.0001 - 0.0003 | 7.6 | 15 | < 2 |
| 0.0059 | Nil | 7.3 | 15 | 3 |

Table 3C illustrates removal of heavy metals in the presence of total hardness by maintaining free chelating agent. The amount of total chelating agent required is increased with increased levels of total water hardness.

**Table 3C**

| Total Chelating Agent | Free Chelating Agent | pH | Total Hardness | Lead |
|---|---|---|---|---|
| (%w/v) | (%w/v) | | mg / l calcium carbonate | (ppb) |
| 0.0068 | 0.0006 - 0.0009 | 7.8 | 13 | < 2 |
| 0.0210 | 0.0003 - 0.0006 | 7.1 | 42 | < 2 |

### Example 4

The present example illustrates the effect of various inventive rinse solutions on the amount of lead leached from bottles washed on a bottling line. The bottles were washed for 10 minutes with a caustic solution containing 3 wt % NaOH at a temperature of 70 ° C. The bottles were subsequently rinsed with the rinse solution and conditions indicated in Table 4. The rinse solutions #1, #2, and #3, as well as a control with no rinse solution were compared. The rinse solution was continuously dosed to maintain the stated concentration in a continuously flowing (refilling) washing/rinsing apparatus for returnable reusable glass containers.

After rinsing, the test bottles were filled with a 500 ppm solution of phosphoric acid and are stored at ambient temperature for not less then 1 hour. The resulting solutions were then tested for lead (Pb) content.

**Table 4**

| **Recirculated Rinse Solution Composition** | **Wt%** | **Pb In-Bottle Content Before Rinse** | **Pb In-Bottle Content after Rinse** | **pH** |
|---|---|---|---|---|
| **Rinse Solution #1** | | | | |
| NTA Total | 0.01 | 80 ppb (average) | <2 ppb | 7.8 |
| Tartaric Acid | 0.0005 | | | |
| Phosphoric Acid | 0.0040 | | | |
| Soft Water | >99 | | | |
| | | | | |
| **Rinse Solution #2** | | | | |
| EDTA Total | 0.01 | 10 ppb (average) | <2 ppb | 8.0 |
| Tartaric Acid | 0.0005 | | | |
| Phosphoric Acid | 0.0040 | | | |
| Soft Water | > 99 | | | |
| | | | | |
| **Rinse Solution #3** | | | | |
| IDS | 0.01 | 80 ppb (average) | <2 ppb | 8.0 |
| Tartaric Acid | 0.0005 | | | |
| Phosphoric Acid | 0.0040 | | | |
| Soft Water | > 99 | | | |
| | | | | |
| **Control** | | | | |
| Soft Water | 100% | 80 ppb (average) | 80 ppb (average) | 8.1 |

## Claims

1. A method of cleaning glassware including
- exposing a glass container to an aqueous caustic solution comprising a metal hydroxide; and
- rinsing the glass container with a rinse solution comprising an effective amount of a heavy metal chelating agent wherein the chelating agent comprises at least an amine functional group, a carboxylic acid functional group, or a phosphorous-oxygen functional group and the rinse solution has a pH of at least 4, but not more than 11.

2. The method of claim 1 wherein the rinse solution further includes an acid.

3. The method of claim 1 wherein the metal hydroxide is an alkali metal hydroxide.

4. The method of claim 3 wherein the alkali metal hydroxide is NaOH or KOH.

5. The method of claim 1 wherein the aqueous caustic solution comprises from 1 to 5 wt % metal hydroxide.

6. The method of claim 5 wherein the alkali metal hydroxide is NaOH or KOH.

7. The method of claim 1 wherein the pH of the rinse solution ranges from 5 to 9.

8. The method of claim 1 wherein the pH of the rinse solution ranges from 6 to 8.

9. The method of claim 1 wherein the effective amount of chelating agent is an amount which reduces the concentration of heavy metal residing on or subsequently leaching from the surface of the glass container being cleaned.

10. The method of claim 9 wherein the effective amount of chelating agent in the rinse solution is an amount sufficient to provide free chelating agent in the rinse solution.

11. The method of claim 9 wherein the effective amount of chelating agent in the rinse solution is an amount sufficient to provide at least 1 ppm free chelating agent in the rinse solution.

12. The method of claim 9 wherein the effective amount of chelating agent in the rinse solution is an amount sufficient to provide at least 5 ppm free chelating agent in the rinse solution.

13. The method of claim 9 wherein the effective amount of chelating agent in the rinse solution is an amount sufficient to provide 0.5 - 100 ppm free chelating agent in the rinse solution.

14. The method of claim 9 wherein the effective amount of chelating agent in the rinse solution is an amount sufficient to provide 5-10 ppm free chelating agent in the rinse solution.

15. The method of claim 1 wherein the effective amount of chelating agent in the rinse solution ranges from 0.0001 to 1 wt%.

16. The method of claim 1 wherein the chelating agent is EDTA, EGTA, NTA, DTPA, HEIDA, IDS, MGDA, gluconic acid, 2,2'- bipyridyl, phosphonic acid, complex phosphates, a mixture thereof, or salts thereof.

17. The method of claim 2 wherein the acid is a mono-, di-, or polycarboxylic acid.

18. The method of claim 2 wherein the acid is acetic, oxalic, malic, maleic, fumaric, tartaric, citric, aspartic, glutamic, succinic acid, a mixture of any two or more thereof, or salts thereof.

19. The method of claim 2 wherein the acid is a chelator.

20. The method of claim 2 wherein the acid ranges in amount from 0.001 to 1.0 wt. %.

21. The method of claim 1 wherein the rinse solution further comprises a buffer.

## Patentansprüche

1. Verfahren zur Reinigung von Glas, aufweisend:
- einen Glasbehälter einer wässrigen Ätzlösung auszusetzen, die ein Metallhydroxid aufweist, und
- den Glasbehälter mit einer Spüllösung zu spülen, die eine wirksame Menge eines Schwermetall-Chelatisierungmittels aufweist, wobei das Chelatisierungmittel wenigstens eine Amin-funktionelle Gruppe, eine Carbonsäure-funktionelle Gruppe oder eine Phosphor-Sauerstoff-funktionelle Gruppe aufweist und die Spüllösung einen pH von mindestens 4, aber nicht mehr als 11 hat.

2. Verfahren nach Anspruch 1, wobei die Spüllösung ferner eine Säure aufweist.

3. Verfahren nach Anspruch 1, wobei das Metallhydroxid ein Alkalimetallhydroxid ist.

4. Verfahren nach Anspruch 3, wobei das Alkalimetallhydroxid NaOH oder KOH ist.

5. Verfahren nach Anspruch 1, wobei die wässrige Ätzlösung 1 bis 5 Gewichtsprozent Metallhydroxid aufweist.

6. Verfahren nach Anspruch 5, wobei das Alkalimetallhydroxid NaOH oder KOH ist.

7. Verfahren nach Anspruch 1, wobei der pH der Spüllösung im Bereich von 5 bis 9 liegt.

8. Verfahren nach Anspruch 1, wobei der pH der Spüllösung im Bereich von 6 bis 8 liegt.

9. Verfahren nach Anspruch 1, wobei die wirksame Menge des Schwermetall-Chelatisierungmittels eine Menge ist, die die Konzentration des Schwermetalls vermindert, das sich auf der Oberfläche des Glasbehälters, der gereinigt wird, befindet oder anschließend von dieser abgewaschen wird.

10. Verfahren nach Anspruch 9, wobei die wirksame Menge des Schwermetall-Chelatisierungmittels in der Spüllösung eine Menge ist, die ausreicht, um in der Spüllösung freies Chelatisierungmittel bereitzustellen.

11. Verfahren nach Anspruch 9, wobei die wirksame Menge des Schwermetall-Chelatisierungmittels in der Spüllösung eine Menge ist, die ausreicht, um in der Spüllösung wenigstens 1 ppm freies Chelatisierungmittel bereitzustellen.

12. Verfahren nach Anspruch 9, wobei die wirksame Menge des Schwermetall-Chelatisierungmittels in der Spüllösung eine Menge ist, die ausreicht, um in der Spüllösung wenigstens 5 ppm freies Chelatisierungmittel bereitzustellen.

13. Verfahren nach Anspruch 9, wobei die wirksame Menge des Schwermetall-Chelatisierungmittels in der Spüllösung eine Menge ist, die ausreicht, um in der Spüllösung 0,5 bis 100 ppm freies Chelatisierungmittel bereitzustellen.

14. Verfahren nach Anspruch 9, wobei die wirksame Menge des Schwermetall-Chelatisierungmittels in der Spüllösung eine Menge ist, die ausreicht, um in der Spüllösung 5 bis 10 ppm freies Chelatisierungmittel bereitzustellen.

15. Verfahren nach Anspruch 1, wobei die wirksame Menge des Schwermetall-Chelatisierungmittels in der Spüllösung im Bereich von 0,0001 bis 1 Gewichtsprozent liegt.

16. Verfahren nach Anspruch 1, wobei das Chelatisierungmittel EDTA, EGTA, NTA, DTPA, HEIDA, IDS, MGDA, Gluconsäure, 2,2'-Bipyridyl, Phosphonsäure, komplexe Phosphate, ein Gemisch davon oder Salze davon ist.

17. Verfahren nach Anspruch 2, wobei die Säure eine mono-, di- oder Polycarbonsäure ist.

18. Verfahren nach Anspruch 2, wobei die Säure Essigsäure, Oxalsäure, Äpfelsäure, Maleinsäure, Fumarsäure, Weinsäure, Zitrononsäure, Asparaginsäure, Glutaminsäure, Bernsteinsäure, ein Gemisch beliebiger zwei oder mehr davon ist oder Salze davon ist.

19. Verfahren nach Anspruch 2, wobei die Säure ein Chelator ist.

20. Verfahren nach Anspruch 2, wobei die Säure im Bereich von 0,001 bis 1,0 Gewichtsprozent liegt.

21. Verfahren nach Anspruch 1, wobei die Spüllösung ferner einen Puffer aufweist.

## Revendications

1. Procédé de nettoyage de verrerie comprenant:
- l'exposition d'un récipient en verre à une solution caustique aqueuse comprenant un hydroxyde métallique; et
- le rinçage du récipient en verre avec une solution de rinçage comprenant une quantité efficace d'un agent chélatant de métaux lourds, l'agent chélatant comprenant au moins un groupe fonctionnel amine, un groupe fonctionnel acide carboxylique, ou un groupe fonctionnel oxygène phosphoreux, et la solution de rinçage a un pH d'au moins 4, mais d'au plus 11.

2. Procédé selon la revendication 1, dans lequel la solution de rinçage contient en outre un acide.

3. Procédé selon la revendication 1, dans lequel l'hydroxyde métallique est un hydroxyde de métal alcalin.

4. Procédé selon la revendication 3, dans lequel l'hydroxyde de métal alcalin est NaOH ou KOH.

5. Procédé selon la revendication 1, dans lequel la solution caustique aqueuse comprend de 1 à 5 % en masse d'hydroxyde métallique.

6. Procédé selon la revendication 5, dans lequel l'hydroxyde de métal alcalin est NaOH ou KOH.

7. Procédé selon la revendication 1, dans lequel le pH de la solution de rinçage va de 5 à 9.

8. Procédé selon la revendication 1, dans lequel le pH de la solution de rinçage va de 6 à 8.

9. Procédé selon la revendication 1, dans lequel la quantité efficace d'agent chélatant est une quantité qui réduit la concentration en métaux lourds qui se trouvent sur la surface du récipient en verre que l'on nettoie ou qui s'en extraient par la suite.

10. Procédé selon la revendication 9, dans lequel la quantité efficace d'agent chélatant dans la solution de rinçage est une quantité suffisante pour fournir de l'agent chélatant libre dans la solution de rinçage.

11. Procédé selon la revendication 9, dans lequel la quantité efficace d'agent chélatant dans la solution de rinçage est une quantité suffisante pour donner au moins 1 ppm d'agent chélatant libre dans la solution de rinçage.

12. Procédé selon la revendication 9, dans lequel la quantité efficace d'agent chélatant dans la solution de rinçage est une quantité suffisante pour donner au moins 5 ppm d'agent chélatant libre dans la solution de rinçage.

13. Procédé selon la revendication 9, dans lequel la quantité efficace d'agent chélatant dans la solution de rinçage est une quantité suffisante pour donner 0,5-100 ppm d'agent chélatant libre dans la solution de rinçage.

14. Procédé selon la revendication 9, dans lequel la quantité efficace d'agent chélatant dans la solution de rinçage est une quantité suffisante pour donner 5-10 ppm d'agent chélatant libre dans la solution de rinçage.

15. Procédé selon la revendication 1, dans lequel la quantité efficace d'agent chélatant dans la solution de rinçage va de 0,0001 à 1 % en masse.

16. Procédé selon la revendication 1, dans lequel l'agent chélatant est l'EDTA, l'EGTA, le NTA, le DTPA, le HEIDA, l'IDS, le MGDA, l'acide gluconique, le 2,2'-bipyridyle, l'acide phosphonique, des phosphates complexes, un de leurs mélanges, ou leurs sels.

17. Procédé selon la revendication 2, dans lequel l'acide est un acide mono-, di- ou polycarboxylique.

18. Procédé selon la revendication 2, dans lequel l'acide est l'acide acétique, oxalique, malique, maléique, fumarique, tartrique, citrique, aspartique, glutamique, succinique, un mélange d'au moins deux quelconques d'entre eux, ou leurs sels.

19. Procédé selon la revendication 2, dans lequel l'acide est un chélateur.

20. Procédé selon la revendication 2, dans lequel la quantité d'acide est de 0,001 à 1,0 % en masse.

21. Procédé selon la revendication 1, dans lequel la solution de rinçage comprend en outre un tampon.
